# EUROPÄISCHE PATENTSCHRIFT

(11) **EP 0 607 855 B1**
(45) Veröffentlichungstag und Bekanntmachung des Hinweises auf die Patenterteilung: **06.12.1995**
(21) Anmeldenummer: 94100358.4
(22) Anmeldetag: 12.01.1994
(51) Int. Cl.: B62D 53/08, G01G 19/10, G01G 19/08

(54) **Vorrichtung zur Messung und Anzeige des Beladezustandes eines Sattelaufliegers**
Device for measuring or indicating the loading state of a semi-trailer
Dispositif de mesure ou d'indication d'état de chargement d'une remorque

(30) Priorität: 21.01.1993 DE 9300734 U
(43) Veröffentlichungstag der Anmeldung: 27.07.1994
(73) Patentinhaber: FELDBINDER & BECKMANN FAHRZEUGBAU oHG, D-21423 Winsen (DE)
(72) Erfinder: Beckmann, Jan-Dirk, D-21423 Winsen/Luhe (DE); Feldbinder, Otto, D-29643 Neuenkirchen (DE)
(74) Vertreter: Richter, Werdermann & Gerbaulet

(56) Entgegenhaltungen:
- EP-A- 0 437 284
- DE-U- 9 112 539
- US-A- 2 646 272
- US-A- 4 861 060

## Beschreibung

Die Erfindung betrifft eine Vorrichtung zur Messung und Anzeige des Ladezustandes eines Sattelaufliegers, bei dem an der Auflagekupplung der Zugmaschine mit dem Sattelauflieger ein Druck- oder Kraftsensor angeordnet ist und der Druck- oder Kraftsensor zwischen einer Gleitplatte und einer Sattelplatte der Zugmaschine im Bereich des Königszapfens des Sattelaufliegers angeordnet ist, wobei der Sattelauflieger eine über ein elastisches Element gelagerte Gleitplatte aufweist.

Insbesondere bei Silofahrzeugen besteht im Falle der Aufnahme eines spezifisch schweren Stoffes die Gefahr der Überladung. Der Überladezustand ist hierbei häufig von außen nicht ohne weiteres zu erkennen. Schon aus sicherheitstechnischen Aspekten sind daher Kontrolleinrichtungen unabdingbar.

Da nicht immer stationär eingerichtete Wagen vorhanden sind, sind bereits Vorschläge gemacht worden, das aus Zugmaschine und Sattelauflieger bestehende Fahrzeug mit Meß- und Anzeigevorrichtungen auszustatten.

So beschreibt das DE-U- 91 12 539 eine Vorrichtung zur Bestimmung und Anzeige des Beladezustandes eines Lastkraftwagens mit einem aus einem rechten und linken Federungselement bestehenden Luftfederungssystem sowohl an mindestens einer vorderen und mindestens einer hinteren Achse, bei dem die Druckräume des rechten und des linken Luftfederungssystems bzw. der vorderen und der hinteren Achse über eine Druckleitung pneumatisch mit einem Drucksensor verbunden sind, der den bestehenden Luftdruck jeweils in ein elektrisches Signal umwandelt und dieses an eine in der Zugmaschine angeordnete Anzeigevorrichtung übermittelt. Hierzu ist es erforderlich, daß die Druckluftsysteme der Zugmaschine und des Sattelaufliegers einschließlich der Druckmeßdosen aufeinander abgestimmt werden. Eine von der Zugmaschine unabhängige Messung des Beladezustandes des Sattelaufliegers ist nicht möglich.

Mit der US-A- 26 46 272, welche den nächstliegenden Stand der Technik gemäß den Merkmalen des Oberbegriffs des Anspruches darstellt, ist eine Vorrichtung vorgeschlagen worden, die zur Messung und Anzeige des Beladezustandes eines Sattelaufliegers dient. Hierbei ist an der Auflagekupplung der Zugmaschine mit dem Sattelauflieger ein Hohlraum ausgebildet, dessen Volumen unter (Beladungs-)Druck abnimmt. In dem Hohlraum befindet sich Hydraulikflüssigkeit, deren Druck über Manometer angezeigt wird.

Es ist daher Aufgabe der vorliegenden Erfindung, die eingangs genannte Vorrichtung dahingehend zu verbessern, daß eine auch unabhängig von der Zugmaschine leicht handhabbare Meßvorrichtung zur Bestimmung des Beladezustandes des Sattelaufliegers geschaffen wird, die möglichst genau Aufschluß über den gesamten Beladungszustand und die auf die Zugmaschine wirkenden Kräfte gibt. Die Vorrichtung soll möglichst leicht handhabbar sein.

Diese Aufgabe wird durch die Merkmale des kennzeichnenden Teils des Anspruches gelöst.

Hierzu wird erfindungsgemäß vorgeschlagen, an der Auflagekupplung der Zugmaschine mit dem Sattelauflieger einen Druck- oder Kraftsensor anzuordnen. Dieser Druck- oder Kraftsensor kann in Verbindung mit den unterschiedlichsten Zugmaschinen verwendet werden, ohne daß eine Anpassung bzw. Neueichung erfolgen muß. Etwaige Fehler der an der Zugmaschine oder dem Sattelschlepper vorhandenen Druckluftmeßsysteme können das Meßergebnis nicht verfälschen. Es ist auch nicht erforderlich, jeweils der Zugmaschine entsprechende Meßparameter im Sinne einer Nullpunktseichung einzugeben, was ohnehin nur bei völlig entladenem Silobehälter möglich ist. Der erfindungsgemäße Druck- oder Kraftsensor gibt unmittelbar Aufschluß, welche Kraft bzw. welchen Druck der Sattelauflieger auf die Zugmaschinen ausübt.

So ist der Druck- oder Kraftsensor vorzugsweise zwischen einer Gleitplatte des Sattelaufliegers und einer Sattelplatte der Zugmaschine im Bereich des Königszapfens der Zugmaschine angeordnet. Hierzu weist der Sattelauflieger eine über ein elastisches Element gelagerte Gleitplatte auf, wobei das elastische Element ein schwimmend gelagertes Luftfederelement oder ein Federelement mit einer Kraftmeßdose oder einem Wegaufnehmer ist. Die Auswahl der jeweiligen Druck- oder Kraftsensoren kann somit der maximal möglichen Beladung wie den jeweiligen Zugmaschinentypen und den Einsatzbedingungen angepaßt werden.

Als Drucksensoren können die nach dem Stand der Technik bekannten Meßgeräte, wie Manometer, ebenso verwendet werden wie beispielsweise Dehnungsmeßstreifen als Wegmeßgeräte, die Rückschlüsse auf die einwirkende Kraft erlauben.

Erfindungsgemäß ist vorgesehen, daß an mindestens einer Achse weitere Druck- oder Kraftsensoren angeordnet sind. Diese Sensoren geben zusätzlichen Aufschluß über Achsbelastungen bzw. ungleiche Ladungsverteilungen in Fahrzeuglängsrichtung bzw. quer dazu.

Insbesondere weist die Zugmaschine und/oder der Sattelauflieger ein Luftfederungssystem mit einem rechten und einem linken Luftfederungselement an jeweils mindestens einer Achse auf, so daß der in den Federungselementen herrschende meßbare Druck weitere Aufschlüsse über die Beladung an betreffenden Punkten gibt. Vorzugsweise können die Druckräume der Luftfederungselemente pneumatisch mit einem ggf. weiteren Drucksensor verbunden sein, womit sowohl die Druck- bzw. Auflagekraft des Sattelaufliegers an der Zugmaschine als auch die durch die Ladung an den Achsen ausgeübte Kraft getrennt voneinander meßbar sind. Alternativ hierzu ist es jedoch ebenso möglich, daß der Drucksensor an der Auflagekupplung und ggf. der weitere Drucksensor mit allen Luftfederungselementen verbunden ist bzw. sind. Hierdurch läßt sich eine pneumatische Verbindung der Luftfederungselemente des Sattelaufliegers an den Achsen mit dem Luftfederungselement an der Kupplungsstelle zur Zugmaschine schaffen. Möglich ist auch eine Erweiterung dahingehend, daß die Luftfederung der Zugmaschine mit in das Meßsystem einbezogen wird, was jedoch eine Anpassung derselben voraussetzt.

Vorteilhafterweise werden die Drucksensoren mit einer elektrischen Anzeigevorrichtung verbunden, die entweder am Sattelauflieger selbst oder über geeignete Verbindungsleitungen in dem Bedienungsstand der Zugmaschine angeordnet ist.

Ein Ausführungsbeispiel der vorliegenden Erfindung ist in den Zeichnungen dargestellt. Es zeigen
- **Fig. 1**: eine Seitenansicht eines Sattelzuges,
- **Fig. 2**: eine schematische Blockschaltansicht der der Drucksensoreinrichtung, und
- **Fig. 3**: eine vergrößerte Ansicht der Auflagekupplung zwischen der Zugmaschine und dem Sattelauflieger.

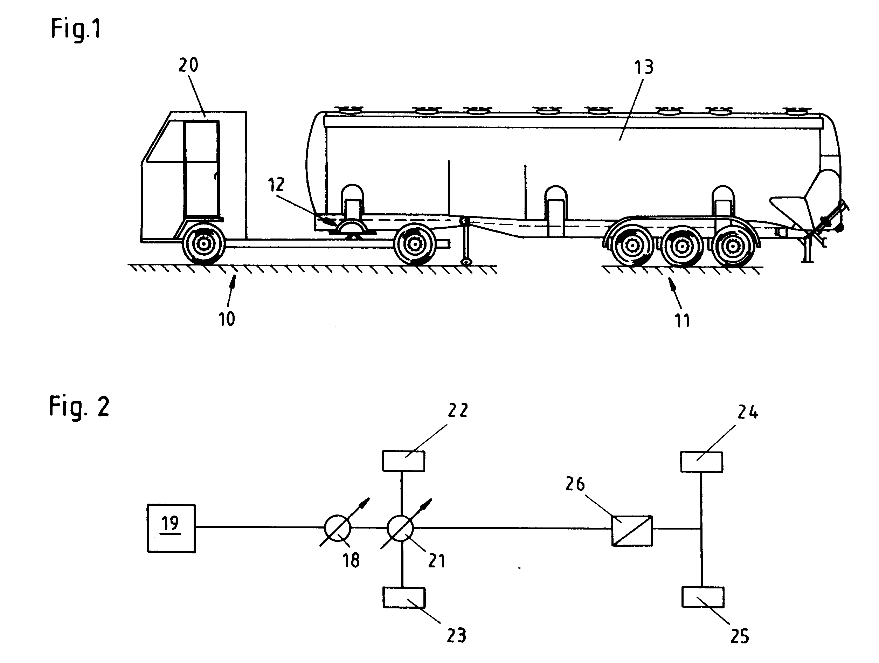

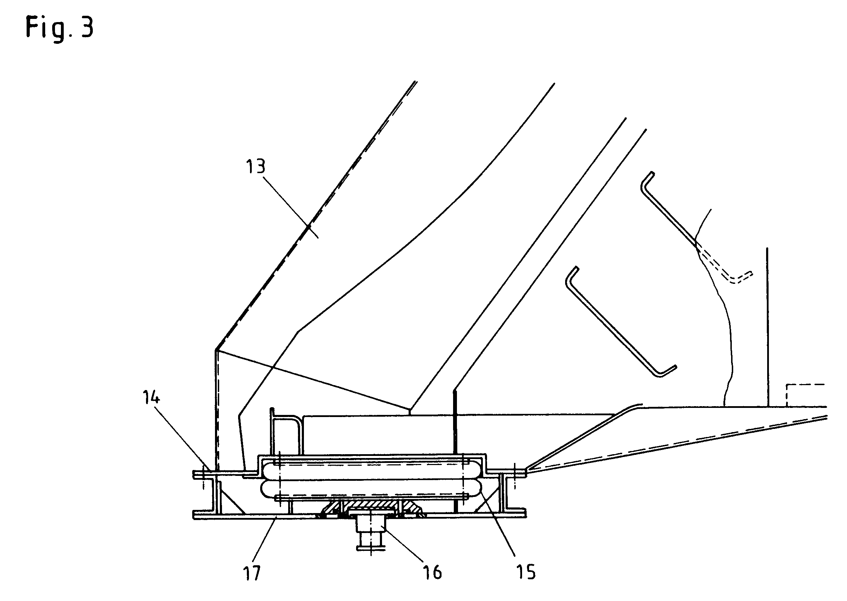

Der Sattelzug nach Fig.1 besitzt eine Zugmaschine 10, die zwei- oder auch mehrachsig sein kann und einen Sattelauflieger 11 zieht, der hier dreiachsig und als Silofahrzeug ausgebildet ist. Der Sattelzug besitzt eine Auflagekupplung 12, die aus Fig. 3 näher ersichtlich ist. Der Silobehälter 13 ist auf einem Rahmen gelagert, der im vorderen Teil eine Gleitplatte 14 besitzt, die eine im wesentlichen zylindrische Ausnehmung bildet. Hierin sind Luftfederelemente 15 gelagert, die einen Königszapfen 16 der Zugmaschine übergreifen, der im Bereich einer Sattelplatte 17 der Zugmaschine 10 angeordnet ist. Die erfindungsgemäßen Luftfederelemente selbst können mit einem Manometer 18 (siehe Fig. 2) verbunden sein. Anstelle eines Druckmeßgerätes kann jedoch ebenso eine Kraftmeßdose oder ein Wegmesser, wie ein Dehnungsmeßstreifen verwendet werden. Wesentlich ist, daß an der Auflagekupplung 12 des Sattelzuges unabhängig von der Zugmaschine 10 eine Kraft- oder Druckmeßeinrichtung vorhanden ist. Soweit diese Druckmeßeinrichtung 18 nicht eine eigene Anzeige besitzt, können - wie in Fig. 2 angedeutet - Verbindungsleitungen zu einer Anzeigevorrichtung 19 vorgesehen sein, die beispielsweise im Führerhaus 20 der Zugmaschine 10 angeordnet sein kann. Die Druckmeßeinrichtung 18 kann entweder isoliert von weiteren Druckmeßeinrichtungen an den Achsen der Zugmaschine oder den Achsen des Sattelaufliegers oder mit weiteren Druckmeßeinrichtungen verbunden sein. Wie schematisch aus Fig. 2 ersichtlich, besitzt der Sattelzug ein Luftfederungssystem mit Druckräumen in Form von Federbälgen 22 bis 25, die miteinander in Verbindung stehen und in einer Verbindungsleitung einen weiteren Drucksensor 26 aufweisen, der mit einer Anzeige 21 verbunden ist. Die pneumatischen Federbälge 22 und 23 sind links und rechts an der Hinterachse der Zugmaschine 10 sowie einer der drei Achsen des Sattelaufliegers 11 (als Federbälge 24 und 25) angeordnet. Alternativ zu der dargestellten Ausführungsform mit einem gemeinsamen Drucksensor 26 können auch jeweilige voneinander getrennt arbeitende Drucksensoren vorgesehen sein.

Wie im vorliegenden Fall dargestellt, kann das Luftfederelement 15 an der Kupplungsstelle 12 mit in das pneumatische System nach Fig. 2 integriert werden. Hierdurch lassen sich ggf. die jeweiligen Drucksensoren zu einem gemeinsamen Sensor 26 und einer einzigen Anzeigevorrichtung 18 verbinden. Dieses System soll jedoch im wesentlich so aufgebaut sein, daß es auch unabhängig von der Zugmaschine Messungen des Beladungszustandes des Aufliegers 11 für den Fall ermöglichst, daß die Zugmaschine selbst nicht über ein Pneumatiksystem verfügt.

## Patentansprüche

1. Vorrichtung zur Messung und Anzeige des Beladungszustandes eines Sattelaufliegers (11), bei dem an der Auflagekupplung (12) der Zugmaschine (10) mit dem Sattelauflieger (11) ein Druck- oder Kraftsensor (18) angeordnet ist, und der Druck- oder Kraftsensor (18) zwischen einer Gleitplatte (14) und einer Sattelplatte (17) der Zugmaschine (10) im Bereich des Königszapfens (16) des Sattelaufliegers (11) angeordnet ist, wobei der Sattelauflieger (11) eine über ein elastisches Element (15) gelagerte Gleitplatte (14) aufweist,
dadurch gekennzeichnet,
daß das elastische Element (15) ein schwimmend gelagertes Luftfederungselement ist oder ein Federelement mit einer Kraftmeßdose oder einem Wegaufnehmer ist und daß an mindestens einer Achse weitere Druck- oder Kraftsensoren (26) angeordnet sind, wobei die Zugmaschine (10) und/oder der Sattelauflieger (11) ein Luftfederungssystem mit einem rechten und einem linken Luftfederungselement (22 bis 25) an jeweils mindestens einer Achse aufweisen, die Druckräume der Luftfederungselemente (22 bis 25) pneumatisch mit dem weiteren Drucksensor (26) verbunden sind, der Drucksensor (18) an der Auflagekupplung (12) mit dem Luftfederungselement (15) und der weitere Drucksensor (26) mit allen rechten und linken Luftfederungselementen (22 bis 25) verbunden ist und die Drucksensoren (18, 26) mit einer elektrischen Anzeigevorrichtung (19) verbunden sind.

## Claims

1. Device for measuring and indicating the state of loading of a semitrailer (11), wherein, on the supporting coupling (12) of the towing vehicle (10) with the semitrailer (11), a pressure or load sensor (18) is mounted and the pressure or load semsor (18) is disposed between a slide plate (14) and a coupling plate (17) of the towing vehicle (10) within the area of the king bolt (16) of the semitrailer (11), in which case the semitrailer (11) possesses a slide plate (14) supported by means of an elastic element (15),
characterized in that
the elastic element (15) is a floatingly supported pneumatic cushioning element or a spring element with a load cell or a distance sensor (displacement transducer) and in that, on at least one axle, further pressure or load sensors (26) are mounted, in which case the towing vehicle (10) and/or the semitrailer (11) possess a pneumatic cushioning system comprising a left-hand and a right-hand pneumatic cushioning element (22 to 25) on, in each case, at least one axle, the pressure chambers of the pneumatic cushioning elements (22 to 25) pneumatically communicating with the further pressure sensor (26), the pressure gauge (18) on the supporting coupling (12) communicating with the pneumatic cushioning element (15) and the further pressure sensor (26) communicating with all the right-hand and left-hand pneumatic cushioning elements (22 to 25) and the pressure sensors (18,26) being connected to an electric indicator (19).

## Revendications

1. Dispositif pour la mesure et l'indication de l'état de charge d'une semi-remorque (11) sur laquelle un détecteur de pression ou de force (18) est placé sur l'accouplement d'appui (12) du véhicule tracteur (10) avec la semi-remorque (11), et le détecteur de pression ou de force (18) est placé entre une plaque coulissante (14) et une plaque d'appui (17) du véhicule tracteur (10) dans la zone du pivot central (16) de la semi-remorque (11), la semi-remorque (11) présentant une plaque coulissante (14) logée au-dessus d'un élément élastique (15),
caractérisé en ce
que l'élément élastique (15) est un élément de suspension pneumatique flottant ou un élément à ressort avec une boîte dynamométrique ou un capteur de déplacement et que d'autres détecteurs de pression ou de force (26) sont placés sur au moins un essieu, le véhicule tracteur (10) et/ou la semi-remorque (11) présentant un système de suspension pneumatique avec un élément de suspension pneumatique droit et un élément de suspension pneumatique gauche (22 à 25) sur respectivement au moins un essieu, les espaces de pression des éléments de suspension pneumatique (22 à 25) étant reliés pneumatiquement au détecteur de pression supplémentaire (26), le détecteur de pression (18) sur l'accouplement d'appui (12) étant relié à l'élément de suspension pneumatique (15) et l'autre détecteur de pression (26) à tous les éléments de suspension pneumatique droits et gauches (22 à 25) et les détecteurs de pression (18, 26) étant reliés à un dispositif d'indication électrique (19).
